# EUROPÄISCHE PATENTSCHRIFT

(11) **EP 3 652 834 B1**
(45) Veröffentlichungstag und Bekanntmachung des Hinweises auf die Patenterteilung: **21.12.2022**
(21) Anmeldenummer: 18733863.7
(22) Anmeldetag: 25.06.2018
(51) Int. Cl.: H02H 9/04, H01C 7/12, H01H 37/76, H01H 85/02

(54) **ANORDNUNG ZUM MONITORING DES ZUSTANDES VON ÜBERSPANNUNGSABLEITERN**
ASSEMBLY FOR MONITORING THE STATE OF SURGE ARRESTERS
SYSTÈME POUR SURVEILLER L'ÉTAT DE DISPOSITIFS DE PROTECTION CONTRE LES SURTENSIONS

(30) Priorität: 10.07.2017 DE 102017115446; 12.12.2017 DE 102017129660
(43) Veröffentlichungstag der Anmeldung: 20.05.2020
(73) Patentinhaber: DEHN SE, 92318 Neumarkt i.d. OPf. (DE)
(72) Erfinder: ZÄUNER, Edmund, 92334 Berching/Pollanten (DE); LUDEWIG, Sascha, 92318 Neumarkt (DE)
(74) Vertreter: Prinz & Partner mbB
(86) Internationale Anmeldenummer: PCT/EP2018/066888
(87) Internationale Veröffentlichungsnummer: WO 2019/011631

(56) Entgegenhaltungen:
- EP-A1- 3 166 193
- DE-A1- 3 908 236
- DE-C1- 10 001 667

## Beschreibung

Die Erfindung geht aus von einer Anordnung zum Monitoring des Zustandes von Überspannungsableitern, welche über lösbare oder nicht lösbare elektrische Kontakte und Verbindungen im zu schützenden Pfad oder vor einem zu schützenden Gerät verschalten sind gemäß Oberbegriff des Anspruches 1.

Aus der EP 3 166 193 und aus der DE 39 08 236 sind Anordnungen zum Monitoring des Zustandes von Überspannungsableitern, gemäß dem Oberbegriff von Anspruch 1, bekannt.

Aus der EP 2 011 128 B1 ist ein Verfahren zur Dimensionierung einer Abtrennvorrichtung für Überspannungsableiter vorbekannt.

Um ein Überspannungsschutzbauteil zu überwachen, besteht diesbezüglich die Möglichkeit, Abtrennvorrichtungen auszubilden, welche bei einem unter thermischem Einfluss sich verflüssigenden Lot eine Schaltbewegung auslösen.

Durch Optimierung eingesetzter Schaltzungen für die Abtrennvorrichtungen und der wirkenden Vorspannkräfte kann das notwendige Schaltvermögen sichergestellt und eine ausreichende Schaltgeschwindigkeit erreicht werden. Üblicherweise befinden sich Abtrennmittel bzw. Abtrennvorrichtungen zusammen mit dem zu überwachenden Überspannungselement in einem aufsteckbaren Oberteil eines zweiteiligen Gehäuses. Das Unterteil kontaktiert über entsprechende Gegenkontakte das Oberteil und weist zudem Anschlussmittel für die äußeren Kontakte, insbesondere Schraubklemmen oder dergleichen auf. Das aktive Element stellt ein überspannungsbegrenzendes oder überspannungsschaltendes Bauteil dar, das von der Abtrennvorrichtung auf Überschreitung einer bestimmten Erwärmungstemperatur überwacht wird. Die Überschreitung vorgegebener Temperaturwerte wird als Defektzustand des aktiven Bauteiles, zum Beispiel einer Funkenstrecke oder eines Varistors gewertet, was dessen Trennung von der Energiezufuhr über die Abtrennvorrichtung erfordert. Mit bekannten Abtrennvorrichtungen besteht demnach die Möglichkeit, Rückschlüsse auf die Restlebensdauer bzw. eingetretene Belastungen der verwendeten Funkenstrecken oder Varistoren als eingesetzte Ableiteinrichtungen zu ziehen.

Bei einer Überlastung, die letztendlich zum Auslösen bekannter thermischer Abtrennvorrichtungen führt, liegt ein durch die Abtrennvorrichtung erkennbarer und nachvollziehbarer Störungsfall vor, so dass letztendlich die überlastete Komponente nach ihrem Abschalten ausgetauscht werden muss.

Die bekannten Lösungen des Standes der Technik weisen jedoch den entscheidenden Nachteil auf, dass ein Verschleiß oder eine Alterung an internen Verbindungen innerhalb des Steckteiles oder zwischen einem Basisund dem Steckteil nicht erkennbar ist.

So können nicht lösbare Verbindungen, zum Beispiel Löt- oder Schweißverbindungen aber auch kraftschlüssige Verbindungen, Alterungen unterliegen, so dass im Laufe eines Produktzyklus sich Übergangswiderstände erhöhen bzw. durch Änderung interkristalliner Zustände Löt- oder Schweißverbindungen nicht mehr die geforderte Kontaktsicherheit ergeben.

Bei lösbaren Verbindungen, insbesondere Steckkontaktsystemen, wie sie vielfach zwischen einem Basisteil und einem Steckteil von Überspannungsableitern Verwendung finden, besteht weiterhin die Gefahr, dass die Kontaktkraft des jeweiligen Stecksystems nachlässt. Ursache hierfür können kleine Blitz- oder Stoßströme sein, die zu einem Kontaktabbrand führen. Darüber hinaus führen auch Umwelteinflüsse wie Temperatur, Feuchte oder dergleichen zu einer Kontaktkorrosion mit einer Verschlechterung der Kontaktübergangswiderstände.

Der sich quasi schleichend ergebende veränderte Zustand an den Verbindungen oder Kontakten führt zu einem erhöhten Spannungsabfall und reduziert die Schutzwirkung der jeweiligen Ableiteinrichtung. Dies deshalb, da der jeweilige Schutzpegel sich dann aus der Summe des Spannungsabfalls am Überspannungsschutzbauteil und den Spannungsabfall an internen Verbindungen, Kontakten und Leitungen darstellt.

Aus dem Vorgenannten ist es daher Aufgabe der Erfindung, eine weiterentwickelte Anordnung zum Monitoring des Zustandes von Überspannungsableitern anzugeben, wobei die Überspannungsableiter über lösbare oder nicht lösbare elektrische Kontakte und Verbindungen im zu schützenden Pfad oder vor dem zu schützenden Gerät bestimmungsgemäß verschalten sind. Die zu schaffende Anordnung soll insbesondere ein Langzeit-Monitoring ermöglichen, um auch bei einem an sich voll funktionsfähigem Ableiter mögliche Risiken rechtzeitig zu erkennen, die beispielsweise in einem sich lösenden Kontakt oder einem sich ausbildenden Kontaktübergangswiderstand zwischen Basis und Steckteil und den dortigen Steckkontakten bestehen.

Die Anordnung zum Monitoring soll weiterhin den sich möglicherweise verschlechternden Zustand im Laufe eines Produktlebens signalisieren, und zwar im Sinne einer Warnung dahingehend, dass eine Vollfunktionsfähigkeit des jeweiligen Überspannungsableiters im tatsächlichen Störungsfall nicht mehr gegeben ist.

Die Lösung der Aufgabe der Erfindung erfolgt durch eine Anordnung gemäß der Merkmalskombination nach Patentanspruch 1, wobei die Unteransprüche mindestens zweckmäßige Ausgestaltungen und Weiterbildungen darstellen.

Die Anordnung geht demnach von Überspannungsableitern aus, welche über lösbare und/oder nicht lösbare elektrische Kontakte und Verbindungen im zu schützenden Pfad oder vor einem zu schützenden Gerät verschalten sind. Bei den elektrischen Kontakten kann es sich um bekannte Steckkontakte handeln. Die Verbindungen können sowohl als Klemmkontaktierungen aber auch als sonstige stoffschlüssige oder kraftschlüssige Verbindungen ausgeführt sein.

Erfindungsgemäß wird der Spannungsabfall an den elektrischen Kontakten und Verbindungen überwacht. Hierfür kommt eine Überwachungseinheit zum Einsatz, die den Kontakten und Verbindungen parallel geschalten ist, das heißt einen entsprechenden Parallelpfad bildet.

Mit steigendem Spannungsabfall an den Kontakten und/oder Verbindungen wird das Maß des Stromanstieges im Parallelpfad mittels der Überwachungseinheit bewertet und bei Überschreiten eines Grenzwertes eine Anzeigeeinrichtung oder eine Fehlermeldeeinheit aktiviert.

Die Überwachungseinheit kann einen Stromsensor aufweisen, welcher mit einer Bewertungselektronik in Verbindung steht. Diesbezüglich kann ein Mikroprozessor zum Einsatz kommen, um eine komplexe Bewertung des Zustandes des Überspannungsableiters über einen längeren Zeitraum vorzunehmen, diese Zustandsanalyse abzuspeichern und aber auch an eine externe Zentraleinheit weiterzugeben. Bei einer derartigen Überwachungseinheit besteht die Möglichkeit, einen sich selbst überwachenden Ableiter im Sinne eines "Smart-SPD" auszubilden.

In einer einfachen und besonders praktikablen Weiterbildung der Erfindung ist die Überwachungseinheit als Schlagbolzen- oder Kennmeldersicherung ausgeführt. Der Schlagbolzen bzw. der Kennmelder ist mit einer Anzeigeeinrichtung oder einer Fehlermeldeeinheit in Verbindung stehend. Die Kennmeldersicherung selbst kann über den ausgelösten Kennmelder unmittelbar als Anzeigeeinheit Verwendung finden.

Durch die im Parallelzweig eingesetzte Kennmeldersicherung wird beim Ansteigen des Übergangswiderstandes im eigentlichen Ableiterpfad der Strom im Parallelpfad erhöht. Erreicht der Strom einen bezogen auf die Kennmeldersicherung vorgebbaren Grenzwert, löst die Sicherung aus und gibt den Kennmelder respektive die Anzeigeeinheit frei, so dass der kritische Zustand signalisiert ist.

Trotz dieser quasi ausgelösten Sicherung bleibt jedoch der Ableiter mit dem zu schützenden Netz oder Gerät verbunden, so dass eine, wenn auch eingeschränkte Schutzmöglichkeit erhalten ist.

Erfindungsgemäß ist der Uberspannungsableiter als Basisteil mit elektrischen Außenanschlussklemmen und ein oder mehreren, vom Basisteil aufnehmbaren Steckteilen realisiert, wobei zwischen Basis- und Steckteil oder Steckteilen lösbare elektrische Kontakte vorgesehen sind.

Im Steckteil ist dann jeweils mindestens eine Ableiteinrichtung, zum Beispiel ausgebildet als Varistor oder Funkenstrecke, mit thermischer Abtrenneinrichtung vorhanden.

Weiterhin ist im Sockelteil die eigentliche Überwachungseinheit befindlich. Diese ist mit einer der Außenanschlussklemmen einerseits sowie mit dem Anschluss der Abtrennvorrichtung an der Ableiteinrichtung verbunden, derart, dass bei steigenden Kontaktübergangswiderständen zwischen Basis- und Steckteil und/oder an den internen Verbindungen im Steckteil der Strom im Parallelpfad und damit der durch die Überwachungseinheit fließende Strom ansteigt, wodurch die Anzeigeeinrichtung oder die Fehlermeldeeinheit aktiviert wird.

Bei einer Weiterbildung dieses Erfindungsgedankens befindet sich die Überwachungseinheit, die Anzeigeeinrichtung und/oder die Fehlermeldeeinheit bevorzugt im Basisteil.

Diesbezüglich kann die Überwachungseinheit als parallel geschalteter Sicherungspfad mit mechanischer Anzeige- oder Fernmeldeeinrichtung ausgebildet werden.

Die Erfindung soll nachstehend anhand eines Ausführungsbeispieles sowie unter Zuhilfenahme von Figuren näher erläutert werden.

Hierbei zeigen:
- Fig. 1: eine prinzipielle Darstellung des elektrischen Schaltbildes eines Überspannungsableiters mit einem Basisteil, welches die entsprechenden Außenanschlussklemmen aufnimmt und Steckkontakte besitzt, wobei das Steckteil Gegenkontakte aufweist und über innere Verbindungen zur thermischen Abtrennvorrichtung sowie zum eigentlichen Ableiter, zum Beispiel ausgebildet als Metalloxid-Varistor, verfügt;
- Fig. 2: mehrere beispielhafte elektrische Ersatzschaltbilder mit dargestellter Überwachungseinheit, welche einen Parallelpfad zu den Kontakten und/oder Verbindungen bildet, wobei in Ausgestaltung als Variante V2 und Variante V3 im Parallelpfad die Überwachungseinheit als Schlagbolzensicherung mit Fernsignalisierung oder als Schlagbolzensicherung mit mechanischer Anzeige technisch umgesetzt ist;
- Fig. 3: eine Prinzipdarstellung eines Basisteils und eines Steckteiles eines Überspannungsableiters mit Verschleißanzeige, ausgeführt als Fernmelde- oder Fernsignalisierungseinrichtung FM; und
- Fig. 4: eine Prinzipdarstellung ähnlich derjenigen nach Fig. 3, wobei die Anzeigeeinrichtung als beispielsweise mechanische Anzeige im Basisteil untergebracht ist.

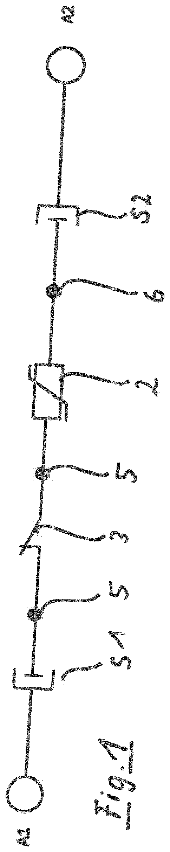

Anhand der Fig. 1 soll deutlich gemacht werden, welche relevanten elektrischen Kontakte und/oder Verbindungen bei Überspannungsableitern vorliegen, die aus einem Basisteil oder Sockelteil nebst Steckteil verfügen. Die jeweiligen Außenanschlussklemmen A1 und A2 führen im Basisteil zu einem Steckkontakt S1 und S2.

Über den Steckkontakt S1 und S2 wird die Verbindung zum Steckteil realisiert, wobei im Steckteil mindestens ein überspannungsbegrenzendes Bauteil 2 befindlich ist, das über eine thermische Abtrennvorrichtung 3 verfügt.

Das überspannungsbegrenzende Bauteil 2 und die thermische Abtrennvorrichtung 3 sind mit den Steckkontakten an den beispielhaften Punkten 5 und 6 verbunden.

Diese Verbindungspunkte können zum Beispiel Löt- oder Schweißverbindungen sein, die ebenso Alterungen unterliegen, wie die eigentlichen Steckkontakte S1 und S2.

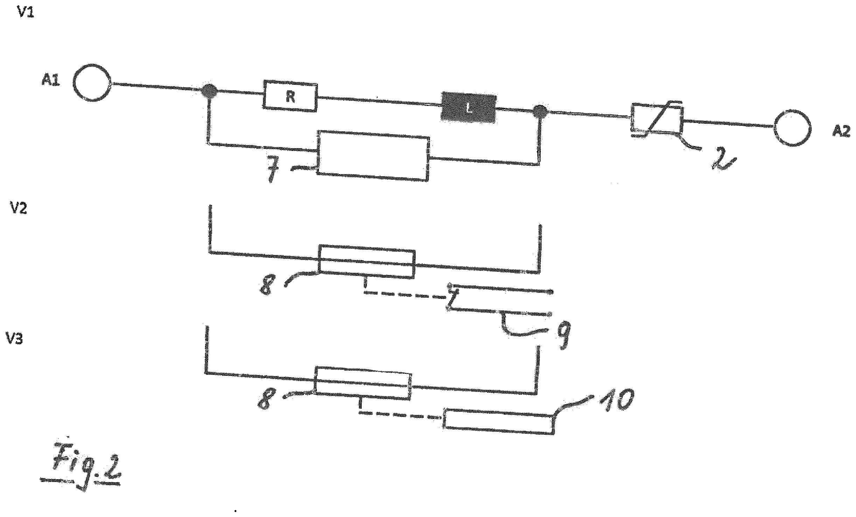

Der Verschleiß oder die Alterung an diesen internen Verbindungen ist durch die existierenden Überwachungssysteme, insbesondere die thermische Abtrennvorrichtung 3, nicht ausreichend erfasst. An dieser Stelle setzt die erfindungsgemäße Lösung an, die als Ersatzschaltbild in der Figur 2 in den Varianten V1 bis V3 illustriert ist.

Konkret wird eine Überwachungseinheit 7 der thermischen Abtrennvorrichtung bzw. den Verbindungen, Leitungen und Steckkontakten bzw. Anschlussklemmen parallel geschalten. Die zu überwachenden Komponenten wurden einerseits als Ohmscher Widerstand R und andererseits als Induktivität L in Fig. 2 beziffert.

Die Überwachungseinheit kann als komplexe elektronische Baugruppe ausgeführt werden, aber auch eine preiswerte Schlagbolzensicherung 8 umfassen, welche eine Fernsignalisierung 9 ermöglicht (Variante V2).

Gemäß der Variante V3 kommt wiederum als Überwachungseinheit eine Schlagbolzensicherung 8 zum Einsatz, die mit einer mechanischen Anzeige 10 in Verbindung steht.

Es wird also bei den letztgenannten Varianten die Schlagbolzensicherung 8 parallel zu den entsprechenden Kontakten und Verbindungen geschalten, wobei der Spannungsabfall über die Kontakte und Verbindungen oder Leitungen einen Stromfluss durch die Sicherung bewirkt. Bei Überschreitung eines entsprechenden Spannungsabfalls über den Kontaktelementen, wird der Strom durch die Sicherung so groß, dass sie auslöst. Der integrierte Schlagbolzen kann dann die mechanische Anzeige 10 oder eine Fernsignalisierung 9 ansteuern bzw. auslösen.

Mit dem vorgestellten Prinzip können die Belastungen eines Überspannungsableiters, die der Stoßstrom über die internen Verbindungen oder Leitungen als Spannungsabfall verursacht, erfasst und dargestellt werden. Gleiches gilt für die Alterung und den Zustand der Kontakte, insbesondere der Steckkontakte, die im Beispiel mit S1 und S2 bezeichnet wurden.

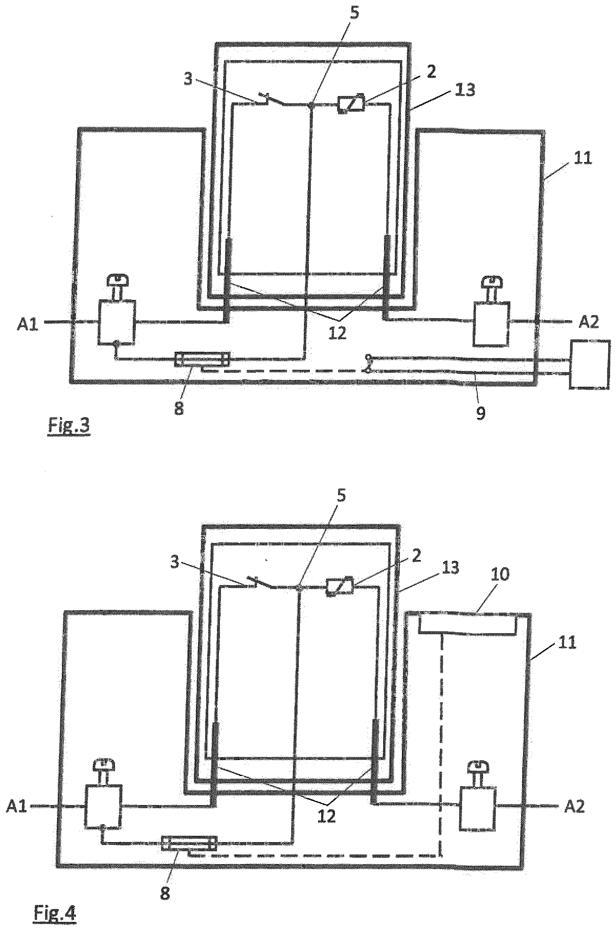

Bei einem praktisch realisierten Überspannungsableiter gemäß den Figuren 3 und 4 nimmt ein Basisteil 11, welches beispielsweise Hutschienen-montierbar ist, die Außenanschlussklemmen A1 und A2 auf. Diese sind als symbolhaft dargestellte Schraubklemmen realisierbar.

Im Boden einer beispielsweise U-förmigen Aussparung des Basisteiles 11 sind Steckkontakte 12 untergebracht, die das Steckteil 13 kontaktieren.

Im Steckteil 13 ist mindestens eine Ableitereinrichtung 2, zum Beispiel ausgebildet als MOV, mit zugehöriger Abtrennvorrichtung 3 vorhanden.

Die als Schlagbolzensicherung 8 ausführbare Überspannungseinheit ist nun einerseits mit der Anschlussklemme A1 in Verbindung stehend. Andererseits führt die Schlagbolzensicherung 8 auf die Verbindung zwischen Abtrennvorrichtung 3 und einem der Anschlüsse des überspannungsbegrenzenden Bauelementes 2. Im Falle steigender Übergangswiderstände, an den Kontakten 12 beispielsweise alterungs- bzw. korrosionsbedingt, steigt der über die Schlagbolzensicherung 8 fließende Strom mit der Folge des Auslösens der Fernsignalisierung 9.

Das Beispiel nach Fig. 4 geht von einer vergleichbaren elektrischen Verschaltung wie zur Fig. 3 dargelegt, aus.

Bei der Variante gemäß Fig. 4 ist im Basisteil 11, vorzugsweise an einer im Betriebsfall bei Montage- oder Wartungsarbeiten sichtbaren Oberseite eine Anzeige 10 angeordnet. Diese kann als mechanische Anzeige, betätigt vom Schlagbolzen der Sicherung 8 ausgeführt, aber auch in anderer Weise, zum Beispiel elektrisch betätigt realisiert werden.

Gemäß den Darlegungen zum Ausführungsbeispiel schafft die erfindungsgemäße Lösung quasi eine Verschleißanzeige, die den Spannungsabfall an internen Kontakten, Verbindungen und Leitungen eines Überspannungsableiters erfasst. Die Auswertung dieser Spannungsabfälle kann über eine elektronische Auswerteeinheit auf der Basis einer Diagnostik des Überspannungsableiters erfolgen, aber auch unter Rückgriff auf einfache parallel geschaltete Sicherungspfade mit Kennmelder und entsprechender Anzeige oder Fernsignalisierung umgesetzt werden.

## Patentansprüche

1. Anordnung zum Monitoring des Zustandes von Überspannungsableitern (2), welche über lösbare und/oder nicht lösbare elektrische Kontakte und Verbindungen (S1; S2; 5; 6) im zu schützenden Pfad oder vor einem zu schützenden Gerät verschalten sind,
der Spannungsabfall an den elektrischen Kontakten und Verbindungen (S1; 5) überwacht und hierfür eine Überwachungseinheit (7; 8) den Kontakten und Verbindungen parallel geschalten ist, wobei mit steigendem Spannungsabfall an den Kontakten und Verbindungen das Maß des Stromanstieges im Parallelpfad mittels der Überwachungseinheit (7; 8) bewertet und bei Überschreiten eines Grenzwertes eine Anzeigeeinrichtung (10) oder Fehlermeldeeinheit (9) aktivierbar ist,
**dadurch gekennzeichnet, dass**
der jeweilige Überspannungsableiter ein Basisteil (11) mit elektrischen Anschlussklemmen (A1; A2) und ein, vom Basisteil (11) aufnehmbares Steckteil (13) aufweist, wobei zwischen Basis- und Steckteil lösbare elektrische Kontakte (12) vorgesehen sind, im Steckteil (13) mindestens eine Ableiteinrichtung (2) mit thermischer Abtrennvorrichtung (3) ausgebildet ist, weiterhin im Basisteil (11) die Uberwachungseinheit (8) befindlich und mit einer der Außenanschlussklemmen (A1) einerseits sowie mit dem Anschluss der Abtrennvorrichtung (3) an der Ableiteinrichtung (2) verbunden ist, derart, dass bei steigenden Kontaktübergangswiderständen zwischen Basis- und Steckteil (11; 13) und/oder an den internen Verbindungen im Steckteil (13) der Strom im Parallelpfad und damit der durch die Überwachungseinheit (8) fließende Strom ansteigt, wodurch die Anzeigeeinrichtung (10) oder Fehlermeldeeinheit (9) aktiviert wird.

2. Anordnung nach Anspruch 1,
**dadurch gekennzeichnet, dass**
die Überwachungseinheit (7) einen Stromsensor und eine Bewertungselektronik aufweist.

3. Anordnung nach Anspruch 1,
**dadurch gekennzeichnet, dass**
die Überwachungseinheit als Schlagbolzen- oder Kennmeldersicherung (8) ausgeführt ist und mit der Anzeigeeinrichtung oder Fehlermeldeeinheit (9; 10) in Verbindung steht.

4. Anordnung nach Anspruch 1,
**dadurch gekennzeichnet, dass**
die Anzeigeeinrichtung (10) oder die Fernmeldeeinheit (9) im Basisteil (11) befindlich ist.

5. Anordnung nach Anspruch 1 oder 4,
**dadurch gekennzeichnet, dass**
die Überwachungseinheit als parallel geschalteter Sicherungspfad (8) mit mechanischer Anzeige oder Fernmeldeeinrichtung (10; 9) ausgebildet ist.

## Claims

1. An arrangement for monitoring the state of surge arresters (2) which are interconnected, by means of releasable and/or non-releasable electrical contacts and connections (S1; S2; 5; 6), in the path to be protected or in front of an apparatus to be protected,
the voltage drop across the electrical contacts and connections (S1; 5) being monitored and, to this end, a monitoring unit (7; 8) being connected in parallel with the contacts and connections, wherein, as the voltage drop across the contacts and connections increases, the extent of the current rise in the parallel path is evaluated by means of the monitoring unit (7; 8) and, when a limit value is exceeded, an indicating device (10) or fault signaling unit (9) is able to be activated,
**characterized in that**
the respective surge arrester includes a base part (11) having electrical connection terminals (A1; A2) and a plug-in part (13) adapted to be received by the base part (11), wherein releasable electrical contacts (12) are provided between the base part and the plug-in part, at least one arrester means (2) having a thermal disconnecting device (3) is formed in the plug-in part (13), furthermore, the monitoring unit (8) is located in the base part (11) and is connected to one of the external connection terminals (A1) on the one hand and to the connection of the disconnecting device (3) to the arrester means (2) on the other hand, such that in the event of increasing contact transition resistances between the base part and the plug-in part (11; 13) and/or at the internal connections in the plug-in part (13), the current in the parallel path and thus the current flowing through the monitoring unit (8) increases, whereby the indicating device (10) or the fault signaling unit (9) is activated.

2. The arrangement according to claim 1,
**characterized in that**
the monitoring unit (7) includes a current sensor and an evaluation electronics.

3. The arrangement according to claim 1,
**characterized in that**
the monitoring unit is configured as a striker fuse or indicating pin fuse (8) and is in communication with the indicating device or the fault signaling unit (9; 10).

4. The arrangement according to claim 1,
**characterized in that**
the indicating device (10) or the remote signaling unit (9) is located in the base part (11).

5. The arrangement according to claim 1 or 4,
**characterized in that**
the monitoring unit is configured as a parallel-connected fuse path (8) having a mechanical indicator or remote signaling device (10; 9).

## Revendications

1. Agencement de monitoring de l'état de parasurtenseurs (2) interconnectés par l'intermédiaire de contacts et de liaisons électriques amovibles et/ou non amovibles (S1 ; S2 ; 5 ; 6) dans le chemin à protéger ou devant un appareil à protéger,
la chute de tension au niveau des contacts et des liaisons électriques (S1 ; 5) étant surveillée, et une unité de surveillance (7 ; 8) étant à cet effet montée en parallèle avec les contacts et les liaisons, l'ampleur de l'augmentation du courant dans le chemin parallèle étant évaluée au moyen de l'unité de surveillance (7 ; 8) lorsque la chute de tension au niveau des contacts et des liaisons augmente, et un moyen d'affichage (10) ou une unité de signalisation de défaut (9) étant apte à être activé(e) lors d'un dépassement d'une valeur limite,
**caractérisé en ce que**
le parasurtenseur respectif comprend une partie de base (11) présentant des bornes de raccordement électriques (A1 ; A2) et une partie enfichable (13) apte à être reçue par la partie de base (11), des contacts électriques amovibles (12) étant prévus entre la partie de base et la partie enfichable, au moins un moyen de dérivation (2) présentant un dispositif de séparation thermique (3) étant réalisé dans la partie enfichable (13), l'unité de surveillance (8) se trouvant en outre dans la partie de base (11) et étant reliée d'une part à l'une des bornes de raccordement extérieures (A1) et d'autre part au raccordement du dispositif de séparation (3) sur le moyen de dérivation (2), de telle sorte qu'en cas d'augmentation des résistances de passage de contact entre la partie de base et la partie enfichable (11 ; 13) et/ou au niveau des liaisons internes dans la partie enfichable (13), le courant dans le chemin parallèle et ainsi le courant circulant à travers l'unité de surveillance (8) augmente, grâce à quoi le moyen d'affichage (10) ou l'unité de signalisation de défaut (9) est activé(e).

2. Agencement selon la revendication 1,
**caractérisé en ce que**
l'unité de surveillance (7) comporte un capteur de courant et une électronique d'évaluation.

3. Agencement selon la revendication 1,
**caractérisé en ce que**
l'unité de surveillance est réalisée sous forme de fusible à percuteur ou de fusible à voyant indicateur (8) et est en liaison avec le moyen d'affichage ou l'unité de signalisation de défaut (9 ; 10).

4. Agencement selon la revendication 1,
**caractérisé en ce que**
le moyen d'affichage (10) ou l'unité de signalisation à distance (9) se trouve dans la partie de base (11).

5. Agencement selon la revendication 1 ou 4,
**caractérisé en ce que**
l'unité de surveillance est réalisée sous forme de chemin de sécurité (8) monté en parallèle présentant un affichage mécanique ou un moyen de signalisation à distance (10 ; 9).
